# EUROPÄISCHE PATENTSCHRIFT

(11) **EP 1 550 498 B1**
(45) Veröffentlichungstag und Bekanntmachung des Hinweises auf die Patenterteilung: **30.07.2008**
(21) Anmeldenummer: 04029815.0
(22) Anmeldetag: 16.12.2004
(51) Int. Cl.: B01F 3/12, B01F 9/00, B01F 15/00, B01L 3/00, B65D 21/02

(54) **Reagenzkassette mit Reagenzbehälter für partikelhaltiges Reagenz für dessen noninvasive Homogenisierung**
Reagent cartridge with reagent containers for reagents containing particles for their non-invasive homogenization
Cartouche de réactifs avec des récipients pour réactifs contenant des particules pour leur homegénéisation non invasive

(30) Priorität: 22.12.2003 DE 10360526
(43) Veröffentlichungstag der Anmeldung: 06.07.2005
(73) Patentinhaber: F. Hoffmann-La Roche AG, 4070 Basel (CH); Roche Diagnostics GmbH, 68305 Mannheim (DE)
(72) Erfinder: Müller, Hans-Jürgen, 82347 Bernried (DE); Mann, Karl-Heinz, 82362 Weilheim (DE); Drescher, Bernd, 82327 Tutzing (DE)
(74) Vertreter: Isenbruck, Günter

(56) Entgegenhaltungen:
- EP-A- 0 651 254
- EP-A- 0 937 983
- JP-A- 10 151 125
- US-A- 6 149 872

## Beschreibung

Die Erfindung bezieht sich auf eine Reagenzkassette mit einem Reagenzbehälter für ein partikelhaltiges Reagenz, welche insbesondere geeignet ist zur noninvasiven Homogenisierung von beschichteten und sedimentierenden Partikeln sowie ein Magazin.

### Stand der Technik

Diagnostische Assay-Systeme beinhalten in vielen Fällen die Verwendung von Partikeln in einer Flüssigkeit für den Ablauf von Reaktionen. Dabei handelt es sich um Verfahren zum Nachweis chemischer Bindungsreaktionen, zum Beispiel im Zusammenhang mit Antigenen oder Antikörpern. Für die korrekte Bearbeitung von Assays auf diesen Systemen ist es in der Regel erforderlich, dass die Partikel in den zugehörigen Behältern zum Zeitpunkt der Entnahme eine möglichst homogene Verteilung aufweisen. Eine homogene Partikelverteilung vermeidet zum Beispiel durch Sedimentationsprozesse auftretende Konzentrationsunterschiede zwischen aufeinanderfolgenden Entnahmen aus den Behältern.

Im Bereich klinisch-diagnostischer Analysesysteme zur Homogenisierung von Partikeln wie zum Beispiel Magnetpartikel mit verbundenen partikelhaltigen Reagenzbehältern sind nachfolgende Verfahren bereits bekannt. Es werden rotierende Paddel eingesetzt. Derartig rotierbar aufgenommene Paddel sind aus EP 0 745 855 sowie aus US 6,772,962 bekannt. Des Weiteren kommen intermittierend rotierende runde Kunststoffflaschen zum Einsatz, die mit radialen Innenflossen ausgestattet sind, wie sie zum Beispiel US 5,637,275, US 5,795,784 oder auch US 5,856,194 entnommen werden können. Darüber hinaus sind Ultraschallverfahren bekannt, bei denen eine durch Ultraschall angeregte Dosiernadel in die Flüssigkeit eintaucht und diese durchmischt. Derartige Lösungen können zum Beispiel US 5,658,799, EP 0 580 483 oder auch US 5,985,672 entnommen werden. Ferner ist es bekannt, in eine runde, exzentrisch rotierende Glasflasche eine Glaskugel einzutauchen, um dem Inhalt der Glasflasche eine Mischbewegung aufzuzwingen. Ein derartiges Verfahren ist zum Beispiel aus US 5,183,638 bekannt. Aus dem Stand der Technik sind ferner Reagenzkassetten bekannt, die einen drehbar gelagerten Behälter aufweisen, der über einen Reibradantrieb angetrieben wird, so zum Beispiel aus US 5,580,524 oder auch aus EP 0 435 481.

Den aus dem Stand der Technik bekannten Verfahren zur Homogenisierung von partikelhaltigen Reagenzien, zum Beispiel in Analysesystemen, die externe Aktoren wie zum Beispiel Paddel einsetzen, haften mehrere Nachteile an. Bei einem derartigen Verfahren zur Homogenisierung von partikelhaltigen Reagenzien handelt es sich um ein invasives Mischverfahren. Dies bedeutet, dass prinzipbedingt die Gefahr der Verschleppung zwischen verschiedenen partikelhaltigen Reagenzbehältern entsteht. Um der Gefahr der Verschleppung bei solchen Analysesystemen entgegenzuwirken, werden in diesen Systemen spezielle Waschstationen und Waschflüssigkeiten eingesetzt, mit denen der Gefahr der Verschleppung entgegengewirkt werden soll. Dies bedingt jedoch einen wesentlich höheren apparativen Aufwand bei solchen Analysesystemen. Bei Analysesystemen, die externe Aktoren wie zum Beispiel Paddel zur Homogenisierung von partikelhaltigen Reagenzien einsetzen, können mehrere Reagenzbehälter nur sequentiell prozessiert werden. Dies zieht wiederum lange Vorbereitungszeiten für einen Durchlauf nach sich, ferner sind Limitierungen in der Gestaltung des Gerätszyklus', des zeitlichen Zugriffs auf andere Reagenzbehälter und der Gerätetaktzeit vorgegeben. Gemäß dieser Verfahren homogenisierten partikelhaltigen Reagenzien tritt ferner bei abnehmendem Flüssigkeitsvolumen eine zunehmende Schaumbildung auf, was relativ hohe Reagentotvolumina nach sich zieht.

Invasiv arbeitende Ultraschallsysteme führen bei bestimmten Partikeltypen zu unzulässigen Veränderungen der Partikelbeschichtung. Ähnliches tritt bei invasiver Zugabe von Hilfsmitteln, wie sie etwa Glaskugeln darstellen, auf. Bei Systemen, bei denen zur Homogenisierung von partikelhaltigen Reagenzien radiale Innenflossen eingesetzt werden, tritt beim Durchmischen bestimmter Flüssigkeiten eine starke Schaumbildung ein; ferner verspritzt die Flüssigkeit, was höchst unbefriedigend ist.

Bei den aus dem Stand der Technik gemäß US 5,788,928 beziehungsweise EP 0 757 253 bekannten Systemen mit schwenkbaren Kassetten ist bei vorgegebenen Reagenzvolumen in der Regel ein signifikant größeres Behältervolumen erforderlich, was zu einem größeren Platzbedarf für derartige Systeme führt.

Dokument US-A-6,149,872 offenbart ein Verfahren gemäß dem Oberbegriff des Anspruchs 1 und eine Kassette gemäß dem Oberbegriff des Anspruchs 3.

Angesichts der oben skizzierten Nachteile der aus dem Stand der Technik bekannten Verfahren zur Homogenisierung von partikelhaltigen Reagenzien liegt der vorliegenden Erfindung die Aufgabe zugrunde, eine Homogenisierung von partikelbeladenen Reagenzien noninvasiv durch Rotation eines Behälters bereitzustellen.

Erfindungsgemäß wird diese Aufgabe durch die Merkmale der Patentansprüche 1 und 3 gelöst.

Die Vorteile der erfindungsgemäß vorgeschlagenen Lösung liegen darin, dass durch die vorgeschlagene noninvasive Homogenisierung der partikelbeladenen Flüssigkeit das Verschleppungsrisiko definitiv ausgeschlossen werden kann. Es bedarf keiner Waschstationen. Ferner ist kein Waschfluid erforderlich und schließlich entsteht kein Flüssigkeitsabfall, der unter Wahrung der gesetzlichen Vorschriften zu entsorgen ist. Ferner lässt sich ein extrem niedriges Totvolumen erreichen, wodurch die Reagenz besser ausgenutzt werden kann, da eine Schaumbildung, wie zu den aus dem Stand der Technik bekannten Verfahren skizziert, unterbleibt. Die erfindungsgemäß vorgeschlagene Lösung erlaubt ferner größere Freiheitsgrade bei der Systemauslegung und bietet die Möglichkeit der Parallelisierung von Zugriffen im Reagenzbereich, da auf mehrere Reagenzien enthaltende Behälter einer Behältereinheit zugegriffen werden kann. Die Parallelisierung ermöglicht ferner erheblich kürzere Prozesszeiten für eine Homogenisierung, verglichen mit einer sequentiellen Bearbeitung.

Ferner lässt sich durch die erfindungsgemäß vorgeschlagene Lösung eine Parallelisierung der Ersthomogenisierung für Reagenzkassetten erreichen; wegen möglicher Partikelsedimentation kann gerade die Ersthomogenisierung besonders zeitaufwendig sein. Vor der Ersthomogenisierung ist keine Liquid-level-detection erforderlich, weil für eine Mischung durch Flaschenrotation der Flüssigkeitspegel innerhalb der Reagenzkassetten nicht bekannt sein muss. Im Gegensatz dazu ist dies bei Mischvorgängen unter Einsatz von Rührpaddeln erforderlich, da ein nur unzureichendes Eintauchen der Rührpaddel eventuell zur Schaumbildung beiträgt und unerwünschte Spritzer erzeugt.

Die erfindungsgemäß vorgeschlagene, zusammensteckbare Kassette bietet ferner den Vorteil, dass Deckelöffnungs- und Deckelschließabläufe beim Homogenisieren nunmehr entfallen können. Die erfindungsgemäß vorgeschlagene, mehrere Reagenzien aufnehmende Reagenzkassette ist mit einem Folienverschluss versehen, der Extrazyklen, wie das Öffnen beziehungsweise Schließen, vermeidet und somit die Durchsatzzeiten reduziert.

Die erfindungsgemäß vorgeschlagene zusammensteckbare Reagenzkassette stellt ferner ein kostengünstiges, in Großserie herstellbares Kunststoffbauteil dar, welches eine einfache Kassettenkonfektionierung ermöglicht. So lässt sich eine Kassettenkonfektionierung dadurch erzielen, dass zwei mit Wölbungen versehene Klipsteile unter Einschluss eines partikelbeladene Reagenzien enthaltenden Behälters einfach zusammengesteckt werden können. An den zusammensteckbaren Klipsteilen befinden sich große und plane Flächen, die das Etikettieren erheblich vereinfachen. Die einzelnen Klipsteile sowie der Behälter, welcher die partikelbeladene Flüssigkeit aufnimmt, können zeitlich unabhängig voneinander befüllt werden.

### Zeichnungen

Anhand der Zeichnung wird die Erfindung nachstehend eingehender beschrieben.

Es zeigt:
- Figur 1: eine zusammengefügte Reagenzkassette, zwei Kassettenteile umfassend, zwischen denen ein weiterer Behälter fixiert ist,
- Figur 2: eines der beiden Klipsteile der Reagenzkassette in perspektivischer Ansicht,
- Figur 3: das Klipsteil der Reagenzkassette gemäß Figur 2 im Halbschnitt,
- Figur 4.1 bis 4.3: Darstellungen eines partikelbeladene Reagenzien aufnehmenden Behälters mit Spiralstruktur,
- Figur 5: eine konfektionierte Reagenzkassette, zwischen deren Klipsteilen der Behälter gemäß der Figuren 4.1 bis 4.3 fixiert ist,
- Figur 6: einen Schnitt durch die konfektionierte Reagenzkassette gemäß der Darstellung in Figur 5,
- Figur 7: die Einzelteile, aus denen die erfindungsgemäß vorgeschlagene Reagenzkassette zusammengesteckt wird,
- Figur 8: die aus den Einzelteilen gemäß Figur 7 zusammengefügte Reagenzkassette,
- Figur 9: ein Anschlussstück, über welches ein in der Reagenzkassette integrierter, eine partikelbeladene Flüssigkeit aufnehmender Behälter in Rotation versetzbar ist,
- Figur 10: ein Mischmagazin mit einem Magazinteller, an dessen Oberseite die erfindungsgemäß vorgeschlagenen Reagenzkassetten aufgenommen sind und
- Figur 11: eine perspektivische Ansicht der Vorrichtung gemäß Figur 10, teilweise aufgeschnitten.

### Ausführungsvarianten

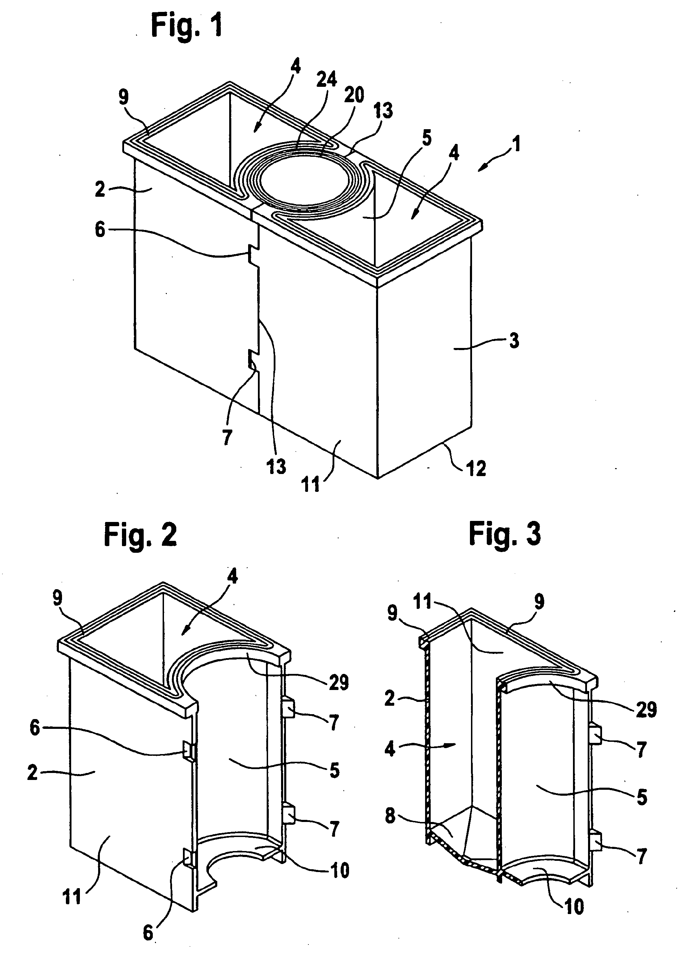

Der Darstellung gemäß Figur 1 ist eine konfektionierte, an ihrer Oberseite noch offene Reagenzkassette gemäß der vorliegenden Erfindung zu entnehmen.

Eine Reagenzkassette 1 wird durch einen ersten, einen Behälter bildenden Kassettenteil 2 sowie einen zweiten, ebenfalls einen Behälter bildenden Kassettenteil 3 gebildet. Die Behälter bildenden Kassettenteile 2, 3 sind an ihren einander zuweisenden Seiten jeweils mit einer Wölbung 5 versehen. Zwischen den Wölbungen 5 der Kassettenteile 2, 3 befindet sich ein Behälter 20 (Beadflasche). Der Behälter 20 weist an seiner Oberseite eine als Schweißfläche ausgebildete Ringfläche 24 auf, ebenso wie die die Behälter bildenden Kassettenteile 2, 3 an ihrer Oberseite eine Schweißfläche 9 aufweisen. Der Behälter 20 dient der Aufnahme einer partikelhaltigen Reagenz, während in Hohlräume 4 der Behälter bildenden Kassettenteile 2, 3 als Flüssigkeit beschaffene Reagenzien eingefüllt werden können. An ihren als Schweißflächen ausgebildeten Oberseiten 9, 24 können die Kassettenteile 2, 3 beziehungsweise der als Beadflasche ausgebildete Behälter 20 mit einer Folie verschweißt werden, um den Inhalt des Behälters 20 beziehungsweise der Behälter bildenden Kassettenteile 2, 3 gegen Kontamination zu schützen.

Wie aus der Darstellung gemäß Figur 1 hervorgeht, liegen die die Behälter bildenden Kassettenteile 2, 3 entlang einer Stoßfuge 13 aneinander an. Das Fügen der Behälter bildenden Kassettenteile 2, 3 an der Stoßfuge 13 erfolgt über Rastöffnungen 6, in welche Rastnasen 7 eingreifen. Die in Figur 1 im zusammengefügten Zustand dargestellte Reagenzkassette 1 umfasst eine großflächige Seitenwand 11 und eine Stirnwand 12, welche große Planflächen zum Aufbringen einer Etikettierung bieten. Die die Behälter bildenden Kassettenteile 2, 3 werden vorzugsweise als Spritzgießbauteile hergestellt, an welchen in einem Arbeitsgang an den jeweiligen Kassettenteilen 2, 3 sowohl die Rastnasen 7 als auch die Rastöffnungen 9 sowie die Wölbungen 5 ausgebildet werden können.

Der Darstellung gemäß Figur 2 ist eines der beiden miteinander fügbaren Kassettenteile der Reagenzkassette zu entnehmen.

Der Darstellung gemäß Figur 2 ist zu entnehmen, dass der einen Behälter bildende Kassettenteil 2 auf der Seite der Wölbung 5 eine halbkreisförmig ausgebildete Einfassung 29 sowie eine Positionierhilfe 10 aufweist. Die Positionierhilfe 10 ist in der Darstellung gemäß Figur 2 halbkreisförmig ausgebildet. Im Bereich der Seitenwand 11 befinden sich die Rastnasen 6, während an der gegenüberliegenden Seitenwand die Rastnasen 7 ausgebildet sind. Den Hohlraum 4 des Kassettenteils 2 umschließend ist an der Oberseite des einen Behälter bildenden Kassettenteils 2 eine Schweißfläche 9 ausgebildet.

In der Darstellung gemäß Figur 3 ist das in Figur 2 dargestellte, einen Behälter bildende Kassettenteil im Schnitt wiedergegeben.

Aus der Darstellung gemäß Figur 3 geht hervor, dass der Hohlraum 4 des einen Behälter bildenden Kassettenteils 2 durch einen Hohlraumboden 8 begrenzt wird, der hinsichtlich des Totvolumens optimiert ist. Unter Totvolumen wird im vorliegenden Zusammenhang das Reagenzvolumen verstanden, was aus dem Hohlraum 4 des Kassettenteils 2 nicht mehr entnehmbar ist.

Die Schweißfläche 9 an der Oberseite des einen Behälter bildenden Kassettenteils 2 ist für eine Doppelversiegelung ausgelegt, d.h. die Schweißfläche 9 kann gestuft ausgebildet sein, so dass ein Aufschweißen mehrfach übereinanderliegender Folien zum Verschluss (Doppelversiegelung) des Hohlraumes 4 des einen Behälter bildenden Kassettenteils 2 möglich ist. Die als Viertelkreis in der Darstellung gemäß Figur 3 dargestellte Einfassung 29 sowie die ebenfalls als Viertelkreis dargestellte Positionierhilfe 10 dienen der drehbaren Lagerung eines in Figur 3 nicht dargestellten Behälters 20, in welchem eine partikelhaltige Reagenz aufgenommen ist. An der hinteren Seitenwand 11 des einen Behälter bildenden Kassettenteils 2 sind vorspringende Rastnasen 7 angespritzt, welche im Wege des Kunststoffspritzgießverfahrens in einem Arbeitsgang während der Herstellung des als Behälter ausgebildeten Kassettenteils 2 angespritzt werden können.

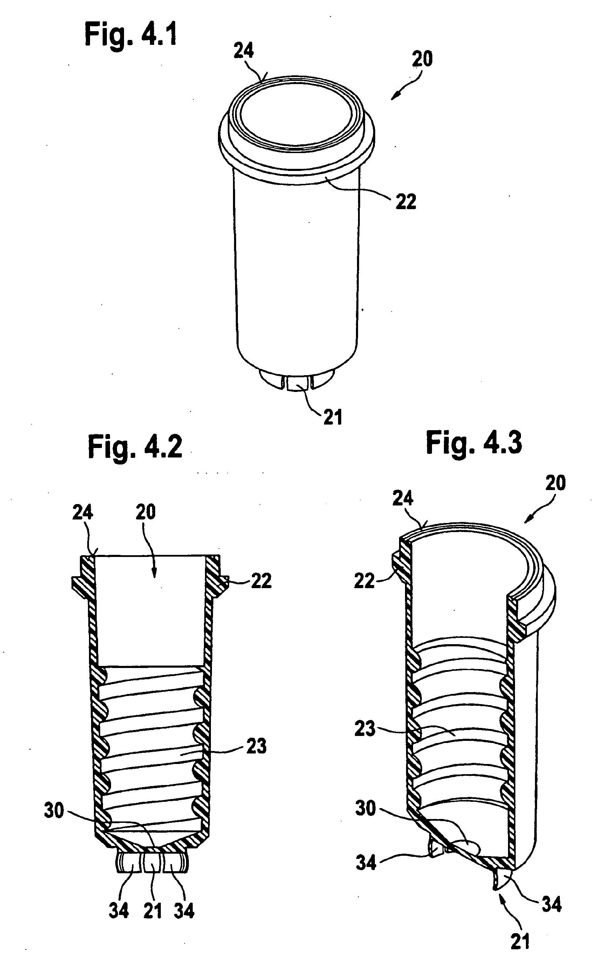

Figur 4.1 zeigt einen als Beadflasche ausgebildeten Behälter zur Aufnahme einer partikelhaltigen Reagenz.

Der Behälter 20 umfasst an seiner Oberseite eine Ringfläche 24, an welcher eine Folie aufschweißbar ist, um nach Befüllen des Behälters 20 mit einer partikelhaltigen Reagenz dessen Innenraum gegen Kontamination zu schützen. An der Oberseite des als Beadflasche ausgebildeten Behälters 20 ist insbesondere ein Positionierring 22 ausgebildet, welcher mit der an den als Behälter ausgebildeten Kassettenteilen 2, 3 angeordneten Einfassung 29 zusammenwirkt. Am Boden des Behälters 20 ist ein geschlitzter Kunststoffring 21 angespritzt. Auch der das partikelhaltige Reagenz aufnehmende Behälter 20 (Beadflasche) kann im Wege des Kunststoffspritzgießverfahrens in einem Arbeitsgang kostengünstig hergestellt werden.

Aus der Darstellung gemäß Figur 4.2 geht der Behälter 20 im Schnitt hervor.

Unterhalb der an der Oberseite des Behälters 20 (Beadflasche) ausgebildeten Ringfläche befindet sich der Positionierring 22. Im unteren Bereich des Behälters 20 ist dieser an seiner Innenseite mit einer spiralförmigen Struktur 23 in Wendelform versehen. Die die Wendelform darstellende spiralförmige Struktur 23 erzeugt bei intermittierendem Drehen eine vertikale Strömung im zylindrischen Wandbereich des Behälters 20 sowie eine entgegenlaufende vertikale Strömung im Zentrum des Behälters 20. Zum Ausgleich entsteht am Flaschenboden eine definierte, sich in radiale Richtung erstreckende Strömung, die sehr gut geeignet ist, die im Bodenbereich des Behälters 20 sedimentierten Partikel zu resuspendieren. Der flache Winkel der spiralförmigen Struktur 23, bezogen auf die Flüssigkeitsoberfläche, ermöglicht eine schonende Strömungserzeugung ohne Kavitationserscheinungen und verhindert definitiv Schaumbildung im Inneren des Behälters 20 und eine Beschädigung von Partikeln, die optional mit einer Beschichtung versehen sein können.

Der Behälter 20 wird durch einen Flaschenboden 30 begrenzt. Unterhalb des Flaschenbodens ist an den Behälter 20 (Beadflasche) ein geschlitzter Ring 21 angespritzt. Der geschlitzte Ring umfasst durch Schlitze voneinander getrennte Laschen 34, die federnd ausgebildet sind und welche eine Kupplungsverbindung mit einem in Figur 4.2 nicht dargestellten Kupplungsstück 31 ermöglichen.

Aus der perspektivisch dargestellten Figur 4.3 geht hervor, dass sich die spiralförmige Struktur 23 in Wendelform entlang der beiden unteren Drittel des Behälters 20 (Beadflasche) erstreckt. Der Flaschenboden 30 ist kegelstumpfförmig ausgebildet. Unterhalb des Flaschenbodens 30 ist an den Behälter 20 zur Aufnahme einer partikelhaltigen Reagenz ein geschlitzter Ring 21 angespritzt, dessen einzelne durch Schlitze voneinander getrennte Laschen 34 federnd ausgebildet sind, um ein einfaches Kuppeln mit einem Kupplungsstück an einem Magazin zu ermöglichen.

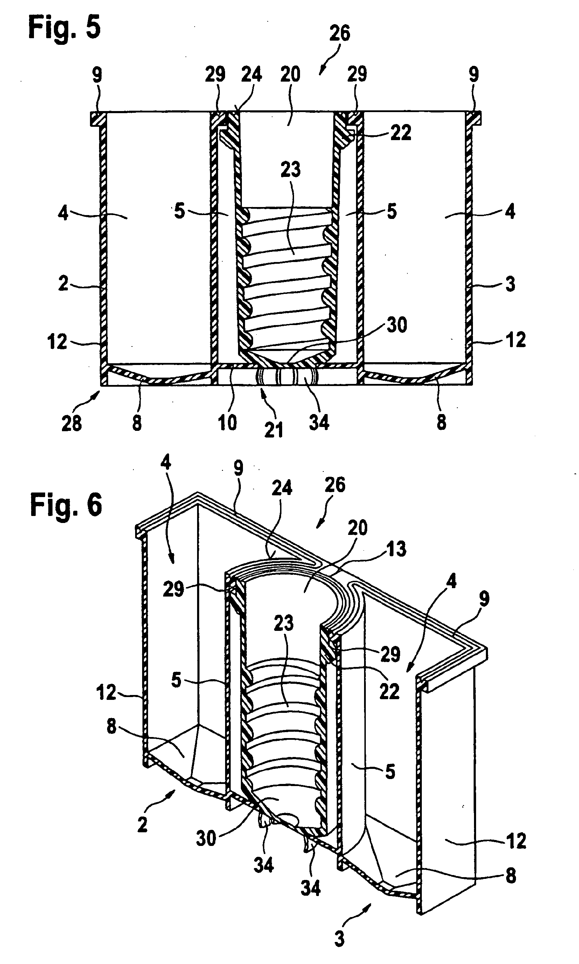

Figur 5 zeigt eine konfektionierte Reagenzkassette, zwei Behälter bildende Kassettenteile und eine zwischen diesen aufgenommenen, eine partikelhaltige Reagenz aufnehmenden Behälter 20 umfassend.

Aus der Darstellung gemäß Figur 5 geht hervor, dass der das partikelhaltige Reagenz aufnehmende Behälter 20 drehbar zwischen den jeweils Behälter bildenden Kassettenteilen 2 und 3 gelagert ist. Der Behälter 20 (Beadflasche) wird einerseits durch die halbkreisförmigen Positionierhilfen 10 der als Behälter dienenden Kassettenteile 2, 3 oberhalb des geschlitzten Ringes 21 fixiert, und andererseits durch die oberhalb des Positionierringes 22 anliegenden halbkreisförmigen Einfassungen 29. In der Darstellung gemäß Figur 5 ist zwischen den Behälter bildenden Kassettenteilen 2, 3 ein Behälter 20 gelagert, der als Beadflasche ausgebildet ist. Der in Figur 5 dargestellte Behälter 20 umfasst eine spiralförmige Struktur in Wendelform 23, die sich oberhalb des Flaschenbodens 30 erstreckt. Aus der in Figur 5 im konfektionierten Zustand 26 dargestellten Reagenzkassette 1 geht hervor, dass im konfektionierten Zustand die Reagenzkassette 3 voneinander getrennte Behälter aufweist. Es sind dies die Hohlräume 4 des Kassettenteils 2 sowie des Kassettenteils 3 sowie der Hohlraum des Behälters 20 zur Aufnahme der partikelhaltigen Reagenz. Die Hohlräume 4 der Kassettenteile 2 und 3 sowie der Hohlraum des Behälters 20 werden jeweils durch einen Totvolumen optimierten Boden 8 sowie durch einen kegelstumpfförmigen Boden 30 begrenzt.

Aus der Darstellung gemäß Figur 5 geht hervor, dass sowohl der einen Behälter bildende Kassettenteil 2 als auch der einen Behälter bildende Kassettenteil 3 jeweils eine Standfläche aufweisen. Der an dem Behälter 20 zur Aufnahme der partikelhaltigen Reagenz ausgebildete geschlitzte Ring 21 stellt ebenfalls eine ebene Standfläche dar. Im konfektionierten Zustand 26 bilden die Standflächen der Kassettenteile 2, 3 beziehungsweise des Behälters 20 zur Aufnahme der partikelhaltigen Reagenz eine ebene Unterseite 28 der Reagenzkassette 1 im konfektionierten Zustand 26. An der Oberseite der Reagenzkassette 1 im konfektionierten Zustand 26 sind als Schweißflächen dienende Flächen 9 ausgebildet; an der Oberseite des Behälters 20 zur Aufnahme der partikelhaltigen Reagenz befindet sich die ebenfalls als Schweißfläche dienende Ringfläche 24.

Aus der Darstellung gemäß Figur 5 ist ferner entnehmbar, dass der geschlitzte Ring 21 mehrere durch Schlitze voneinander getrennte federnde Laschen 34 aufweist. Mit Bezugszeichen 5 sind die gewölbten Flächen der Behälter bildenden Kassettenteile 2, 3 identifiziert, die einen Hohlraum zwischen den Positionierhilfen 10 und dem Positionierring 22 bilden, wenn die Behälter bildenden Kassettenteile 2, 3 ineinandergefügt, d.h. zusammengesteckt sind.

Aus der Darstellung gemäß Figur 6 geht eine Schnittdarstellung der in Figur 5 dargestellten Reagenzkassette im konfektionierten Zustand hervor.

Der zwischen den Behälter bildenden Kassettenteile 2, 3 drehbar gelagerte Behälter 20 zur Aufnahme einer partikelhaltigen Reagenz 20 wird durch die Einfassungen 29 und dem Positionierring 22, der am Behälter 20 angespritzt ist, im oberen Bereich gelagert, während die drehbare Lagerung des Behälters 20 (Beadflasche) im unteren Bereich durch die halbkreisförmig ausgebildeten Positionierhilfen 10 erfolgt, die an der Unterseite der gewölbten Flächen 5 der Kassettenteile 2, 3 angespritzt sind. Jedes der Behälter bildenden Kassettenteile 2, 3 umfasst einen Totvolumen-optimierten Boden 8 (vgl. Darstellung gemäß Figur 3).

In der Darstellung gemäß Figur 6 ist zwischen den Behälter bildenden Kassettenteilen 2, 3 ein Behälter 20 eingelassen, der eine spiralförmige Struktur 23 in Wendelform auf seiner Innenseite aufweist. Bei Rotation des Behälters 20 über den Laschen 34 enthaltenden geschlitzten Ring 21 wird durch die spiralförmige Struktur 23 in Wendelform an der Innenseite des Behälters 20 eine Homogenisierung der partikelhaltigen Reagenz im Behälter 20 (Beadflasche) erreicht, wodurch durch Sedimentation aufgetretene Konzentrationsunterschiede im partikelhaltigen Reagenz ausgeglichen werden können, d.h. eine gleichmäßige Partikelverteilung innerhalb der partikelhaltigen Reagenz erreicht werden kann.

Die Stirnwände 12 der Reagenzkassette 1 im konfektionierten Zustand 26 können zum Aufbringen von Etiketten genutzt werden. Gleiches gilt für die zwischen den Stirnwänden 12 liegende Seitenwand 11 der Reagenzkassette 1 im konfektionierten Zustand 26. Entlang der Stoßfuge 13 liegen die Behälter bildenden Kassettenteile 2, 3 aneinander an; aus Gründen der zeichnerischen Darstellungen sind die miteinander zusammenwirkenden Rastöffnungen 6 beziehungsweise Rastnasen 7 entlang der Stoßfuge 13 in den Figuren 5 und 6 nicht dargestellt.

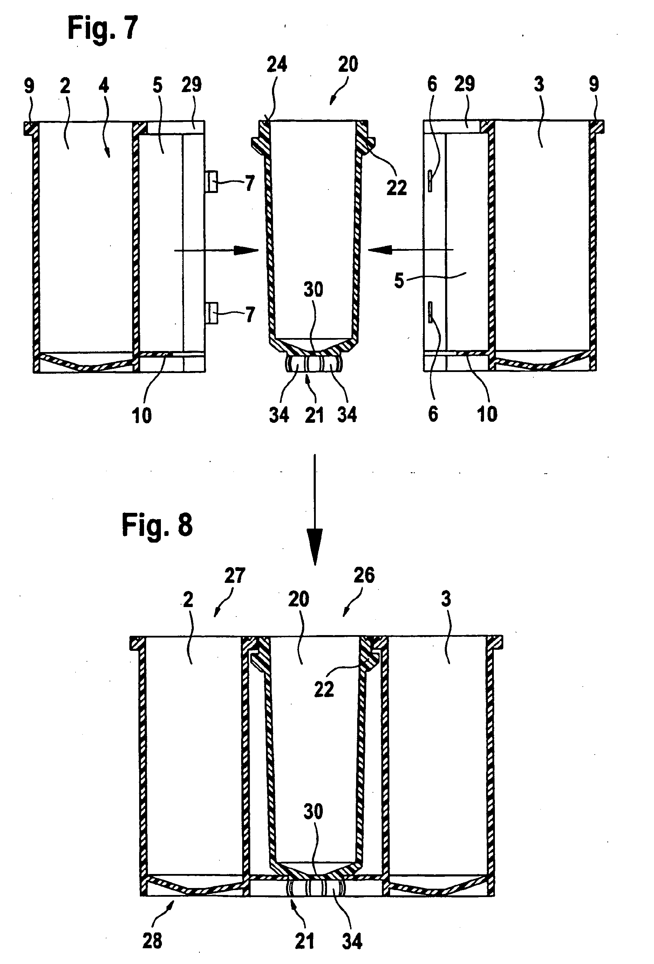

Figur 7 sind die einzelnen Behälter, aus denen die erfindungsgemäß vorgeschlagene Reagenzkassette gefügt wird, zu entnehmen.

Die jeweils im Schnitt dargestellten Kassettenteile 2, 3 sowie der Behälter 20 werden in Richtung der Pfeile miteinander gefügt. Beim Fügen, d.h. Aufeinanderzubewegen der Behälter bildenden Kassettenteile 2, 3 rasten die Rastnasen 7 des einen Behälter bildenden Kassettenteils 2 in die Rastöffnungen 6 des anderen, einen Behälter bildenden Kassettenteils 3 ein. Während des Fügens wird der Behälter 20 (Beadflasche) zur Aufnahme einer partikelhaltigen Reagenz so zwischen den miteinander zu fügenden Kassettenteilen 2, 3 ausgerichtet, dass der Positionierring 22 unterhalb der Einfassungen 29 an der Oberseite der beiden Kassettenteile 2 zur Anlage kommt. Die beiden am unteren Bereich der Behälter bildenden Kassettenteile 2, 3 angeordneten Positionierhilfen 10 umschließen den Behälter 20 oberhalb des geschlitzten Ringes 21, der federnd ausgebildete Laschen 34 aufweist. Dadurch wird eine drehbare Lagerung des eine partikelhaltige Reagenz aufnehmenden Behälters 20 (Beadflasche) in einer in Figur 8 dargestellten Reagenzkassette im konfektionierten Zustand 26 erreicht. Aufgrund der Ausbildung der Standfläche des einen Behälter bildenden Kassettenteils 2 sowie des anderen, einen Behälter bildenden Kassettenteils 3 und der Geometrie des geschlitzten Ringes 21 wird im konfektionierten Zustand 26 der Reagenzkassette 1 eine ebene Unterseite 28 erhalten. Aufgrund der Fügbarkeit der einzelnen Behälter, d.h. der Kassettenteile 2 und 3 und des Behälters 20 (Beadflasche), kann eine Abfüllung von Reagenzien und eine Kassettenkonfektionierung demzufolge zeitlich unabhängig voneinander erfolgen. Wie aus den Darstellungen gemäß der Figuren 7 und 8 hervorgeht, folgt ein Fügen der erfindungsgemäß vorgeschlagenen Reagenzkassette 1 durch einfaches Zusammenstecken der Komponenten 2, 3 und 20, ohne dass weitere Zusatzteile wie beispielsweise Deckel oder halsförmig ausgebildete Fügeelemente erforderlich wären.

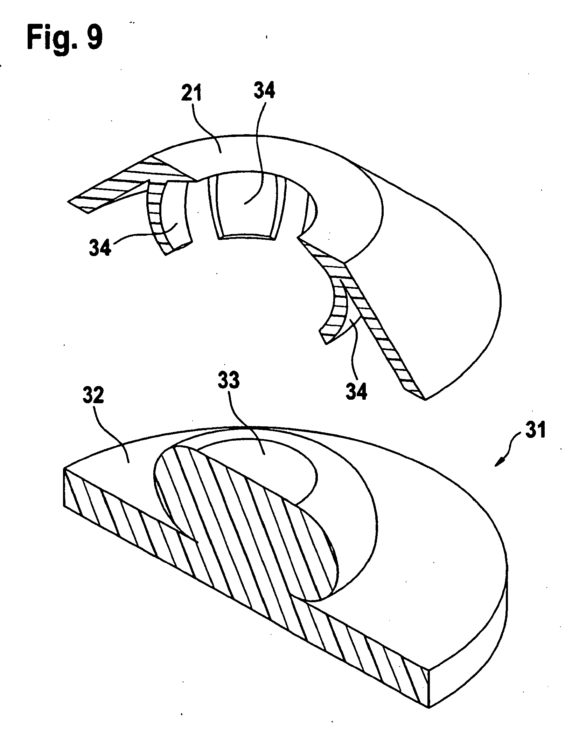

Der Darstellung gemäß Figur 9 ist ein Kupplungsstück entnehmbar, mit welchem der geschlitzte Ring an der Unterseite des die partikelhaltige Reagenz aufnehmenden Behälters gefügt wird.

Das in Figur 9 dargestellte Kupplungsstück 31 weist einen scheibenförmig ausgebildeten Sockel 32 sowie einen an diesem ausgebildeten Kupplungskopf 33 auf. Beim Aufstecken der Reagenzkassette 1 im konfektionierten Zustand 26 gemäß Figur 8 rastet der geschlitzte Ring, d.h. dessen federnd ausgebildete Laschen 34 am Kupplungskopf 33 ein. Die federnd ausgebildeten, durch Schlitze voneinander getrennten Laschen 34 umschließen den Kupplungskopf 33 zur Gänze. Durch den geschlitzten Ring 21, ausgebildet an dem in Rotation zu versetzenden Behälter 20 zur Aufnahme einer partikelhaltigen Reagenz, und dem Kupplungsstück 31 wird eine Kupplungsverbindung hergestellt, durch welche eine Rotation in den die partikelhaltige Reagenz aufnehmenden Behälter 20 (Beadflasche) eingeleitet werden kann. Das Einrasten der federnd ausgebildeten Laschen 34 des geschlitzten Ringes 21 unterstützt ferner die korrekte Positionierung des Behälters 20 innerhalb der Reagenzkassette 1 und ist vorteilhaft für eine reibungsarme Flaschenrotation innerhalb der Reagenzkassette 1 im konfektionierten Zustand 26. Das Einrasten des geschlitzten Ringes 21 am Kupplungsstück 31 erfolgt bei manueller oder automatischer Bestückung eines Reagenzmagazins, wie nachfolgend noch beschrieben wird.

Der Vollständigkeit halber sei erwähnt, dass die in Figur 7 beispielsweise dargestellte Rastverbindung zwischen den Rastöffnungen 6 und der Rastnasen 7 an den miteinander zu fügenden Behälter bildenden Kassettenteilen 2, 3 auch so ausgestaltet werden kann, dass ein zerstörungsfreies Lösen der beiden Kassettenteile voneinander nicht möglich ist.

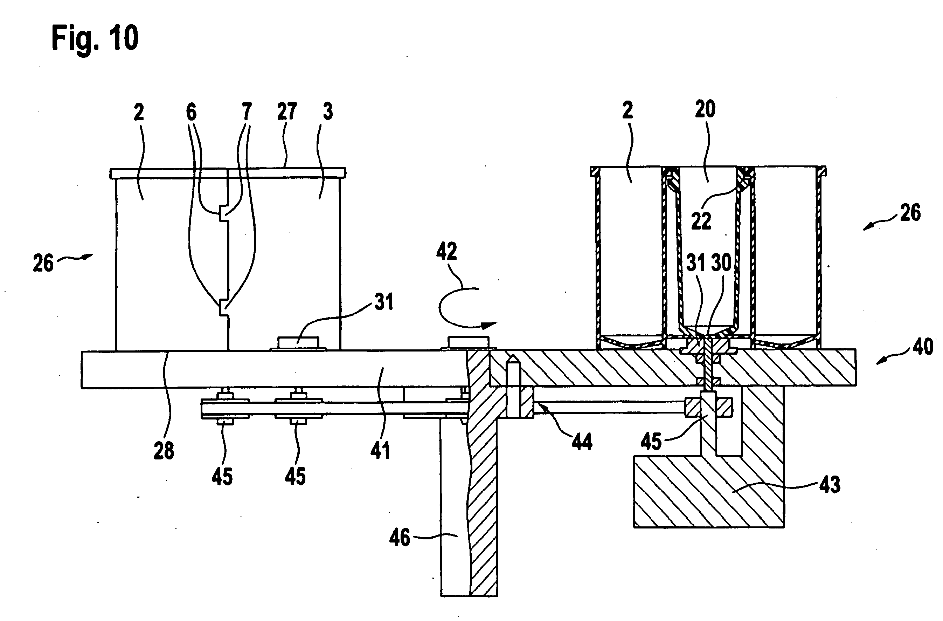

Aus der Darstellung gemäß Figur 10 geht in schematischer Ansicht ein Reagenzmagazin hervor.

Das Reagenzmagazin 40 umfasst im Wesentlichen einen Magazinteller 41, der von einer zentralen Welle 46 gehalten ist. Der Magazinteller 41 rotiert im Drehsinn 42, angedeutet durch den mit Bezugszeichen 42 identifizierten Pfeil. Anstelle des in Figur 10 dargestellten Magazintellers 41, der eine denkbare Ausführungsvariante darstellt; kann das Reagenzmagazin 40 auch in Matrixanordnung ausgebildet sein. Im Magazinteller 41 sind mehrere Kupplungsstücke 31 eingelassen. Die Kupplungsstücke 31 werden ihrerseits von einer Antriebswelle 45 angetrieben, die über ein Getriebe 44 mit einem Antrieb 43 in Verbindung steht. Auf der Oberseite des Magazintellers 41 sind Reagenzkassetten 1 im fertig konfektionierten Zustand 26 positioniert. Aufgrund der eben ausgebildeten Unterseite 28 der Reagenzkassetten 1 im konfektionierten Zustand 26 stehen diese plan auf der Oberseite des Magazintellers 41 auf. Die Reagenzkassetten 1 im konfektionierten Zustand 26 sind so auf der Oberseite des Magazintellers 41 positioniert, dass der geschlitzte Ring eines Behälters 20 einer Reagenzkassette 1 im konfektionierten Zustand 26 die angetriebenen Kupplungsstücke 31 am Magazinteller 41 umgreift. Dadurch wird eine Kupplungsverbindung zwischen der drehbar in der Reagenzkassette 1 im konfektionierten Zustand 26 gelagerten Behälter 20 zur Aufnahme einer partikelhaltigen Reagenz geschaffen. Durch den Antrieb 43, das Getriebe 44 sowie die Antriebswelle 45 des Kupplungsstückes 31 wird der drehbar in der Reagenzkassette 1 gelagerte Behälter 20 zur Aufnahme einer partikelhaltigen Reagenz in Rotation versetzt, während die Reagenzkassette 1 im konfektionierten Zustand 26 in ihrer Position an der Oberseite des Magazintellers 41 verbleibt. Damit können in einer Reagenzkassette 1 drei Reagenzien aufgenommen sein, von denen das zu homogenisierende, da sedimentierende Partikel enthaltende Reagenz in der über die Kupplungsverbindung 21, 31 angetriebenen Behälter 20 (Beadflasche) enthalten ist. In einem Arbeitsgang lassen sich demnach pro Reagenzkassette 1 mehrere Reagenzien für eine Weiterverarbeitung vorbereiten. Aus der Darstellung gemäß Figur 10 hervor, dass an der Oberseite des Magazintellers 41 entsprechend der Anzahl der angetriebenen Kupplungsstücke 31 mehrere Reagenzkassetten 1 parallel behandelt werden können. Die Behälter bildenden Kassettenteile 2, 3 sind jeweils über die Rastverschlüsse 6, 7, Rastöffnungen 6 und Rastnasen 7 umfassend, lösbar miteinander verbunden, wobei die Klipsverbindung zwischen den die Behälter bildenden Kassettenteile 2, 3 auch so gestaltet werden kann, dass ein zerstörungsfreies Lösen nicht mehr möglich ist.

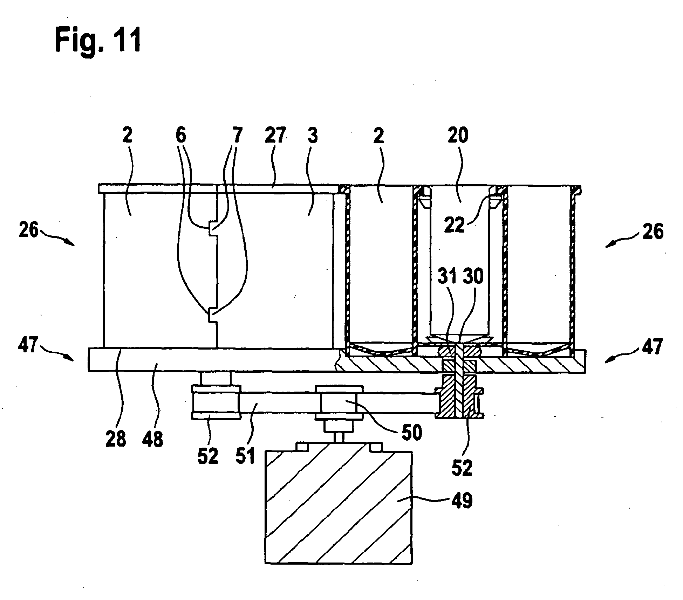

Aus der Darstellung gemäß Figur 11 geht in schematischer Ansicht ein Reagenzmagazin in Matrixanordnung hervor.

Der Darstellung gemäß Figur 11 sind Reagenzkassetten zu entnehmen, die das erste Behälter bildende Kassettenteil 2 (R1-Flasche) und das zweite Behälter bildende Kassettenteil 3 aufweisen. Die Kassettenteile 2 beziehungsweise 3 sind durch eine Rastverbindung, gegeben durch die Rastöffnung 6 und die darin einrastende Rastnase 7 miteinander verbunden. Die beiden in Figur 11 in einem Reagenzmagazin 47 in Matrixanordnung aufgenommenen Reagenzkassetten stehen mit ihren ebenen Unterseiten 28 auf einem Teller 48 des Reagenzmagazins 47 in Matrixanordnung auf. Die Reagenzkassetten sind an ihrer Oberseite geschlossen und enthalten einzelne Behälter 20 (Beadflaschen). Die Beadflaschen 20 sind mit Hilfe von Positionierringen 22 gesichert und im Bereich ihres Flaschenbodens 30 mit dem Kupplungsstück 31 gekoppelt. Das Kupplungsstück 31 wiederum ist durch eine Antriebswelle 52 angetrieben, die mit einem Riemenrad oder dergleichen versehen ist und beispielsweise durch einen Zahnriemen 51 angetrieben werden kann. Der Zahnriemen 51 umschließt ein weiteres Antriebsrad, welches die in Figur 11 auf der linken Seite der Figur dargestellte Reagenzkassette, bestehend aus dem ersten Behälter bildenden Kassettenteil 2 und dem zweiten Behälter bildenden Kassettenteil 3 angeordnet ist. Der Zahnriemen 51 wird über ein Antriebszahnrad 50 eines Antriebes 49 angetrieben und versetzt mittels Antriebswellen 52, der Kupplungsstücke 31, die an der Unterseite im Bereich des Flaschenbodens 30 durch das Kupplungsstück 31 angekoppelten Behälter 20 (Beadflaschen) innerhalb der Reagenzkassetten in Rotation.

Mit der in Figur 11 dargestellten Ausführungsvarianten können in einer Reagenzkassette drei Reagenzien in verschiedenen Behältern 20 (Beadflaschen) aufgenommen sein, von denen die mittlere über das Kupplungsstück 31, die Antriebswelle 52, den Zahnriemen 51 und den Antrieb 49 zu homogenisierende Reagenz enthaltende Behälterflasche 20 in Rotation versetzbar ist. Damit lassen sich in einem Arbeitsgang ähnlich wie in der in Figur 10 dargestellten Ausführungsvariante pro Reagenzkassette 1 mehrere Reagenzien für eine Weiterverarbeitung vorbereiten. Die zu homogenisierende, da sedimentierende Partikel enthaltende Reagenz ist dabei vorzugsweise in der über die Kupplungsverbindung 31, 52 angetriebenen Behälter 20 (Beadflasche) aufgenommen. Entsprechend der Größe der Tellerfläche des Tellers 48 für das Reagenzmagazin 47 in Matrixanordnung und entsprechend der Anzahl der über den Zahnriemen 51 angetriebenen Antriebswellen 52 kann eine Vielzahl von Reagenzkassetten 1 in Matrixanordnung in dem in Figur 11 dargestellten Reagenzmagazin 47 in Matrixanordnung behandelt werden.

### Bezugszeichenliste

- 1: Reagenzkassette
- 2: erstes Behälter bildendes Kassettenteil
(R1-Flasche)
- 3: zweites Behälter bildendes Kassettenteil
(R2-Flasche)
- 4: Hohlraum
- 5: gewölbte Seite
- 6: Rastöffnung
- 7: Rastnase
- 8: Hohlraumboden
- 9: Schweißfläche
- 10: Positionierhilfe
- 11: Seitenwand
- 12: Stirnwand
- 13: Stoßfuge

- 20: Behälter (Beadflasche)
- 21: geschlitzter Ring
- 22: Positionierring
- 23: spiralförmige Struktur (Wendelform)
- 24: Ringfläche (gestufte Schweißfläche)

- 26: konfektionierte Reagenzkassette
- 27: Oberseite Reagenzkassette
- 28: ebene Unterseite Reagenzkassette
- 29: Einfassung
- 30: Flaschenboden
- 31: Kupplungsstück
- 32: Sockel
- 33: Kupplungskopf
- 34: federnde Laschen Schlitzring 21

- 40: Reagenzmagazin
- 41: Magazinteller
- 42: Drehsinn
- 43: Antrieb
- 44: Getriebe
- 45: Antriebswelle für Kupplungsstück
- 46: zentrale Welle
- 47: Reagenzmagazin in Matrixanordnung
- 48: Teller in Matrixanordnung
- 49: Antrieb
- 50: Antriebszahnrad
- 51: Zahnriemen
- 52: Antriebswelle

## Patentansprüche

1. Verfahren zur Behandlung von in Behältern (2, 3; 20) aufgenommenen partikelhaltigen Reagenzien und Reagenzien in flüssiger Form mit nachfolgenden Verfahrensschritten:
a) dem Fügen einer Reagenzkassette (1) aus Kassettenteilen (2, 3) derart, dass zwischen diesen eine partikelhaltige Reagenz aufnehmender Behälter (20) drehbar gelagert wird,
b) dem Herstellen einer lösbaren Kupplungsverbindung (21, 31) zwischen Reagenzkassette (1) im konfektionierten Zustand (26) und einem angetriebenen Kupplungsstück (31) enthaltenden Magazinteller (41),
c) dem Einleiten einer Rotationsbewegung in den die partikelhaltige Reagenz aufnehmenden Behälter (20) über die Kupplungsverbindung (21, 31) zur Homogenisierung der partikelhaltigen Reagenz,
**dadurch gekennzeichnet, dass** die Reagenzkassette (1) im konfektionierten Zustand (26) während der Rotation der Behälter (20) mit ihrer ebenen Unterseite (28) auf dem Magazinteller (41) aufsteht.

2. Verfahren gemäß Anspruch 1, **dadurch gekennzeichnet, dass** der die partikelhaltige Reagenz aufnehmende Behälter (20) relativ zur Reagenzkassette (1) im konfektionierten Zustand (26) in Rotation versetzt wird.

3. Kassette zur Aufnahme von Behältern (2, 3, 30), die jeweils partikelhaltige und partikelfreie Reagenzien aufnehmen, wobei der die partikelhaltige Reagenz enthaltende Behälter (20) rotierbar aufgenommen ist, wobei die Reagenzkassette (1) miteinander fügbare, Behälter bildende Kassettenteile (2, 3) umfasst, die im miteinander gefügten Zustand (26) den die partikelhaltige Reagenz aufnehmenden Behälter (20) drehbar lagern, **dadurch gekennzeichnet, dass** der Behälter (20) an seiner Innenseite mit einer sich in Umfangsrichtung erstreckenden spiralförmigen Struktur (23) in Wendelform versehen ist.

4. Kassette gemäß Anspruch 3, **dadurch gekennzeichnet, dass** der Behälter (20) als Behälter zur Aufnahme partikelhaltiger Reagenzien ausgebildet ist.

5. Kassette gemäß Anspruch 3, **dadurch gekennzeichnet, dass** die die Behälter bildenden Kassettenteile (2, 3) miteinander durch einen Rastverschluss (6, 7) verrastbar sind.

6. Kassette gemäß Anspruch 3, **dadurch gekennzeichnet, dass** die die Behälter bildenden Kassettenteile (2, 3) an ihrer Oberseite (27) eine Schweißfläche (9) aufweisen.

7. Kassette gemäß Anspruch 6, **dadurch gekennzeichnet, dass** die die Behälter bildenden Kassettenteile (2, 3) an ihrer Oberseite (27) eine Einfassung (29) und im Bereich ihrer ebenen Unterseite (28) eine Positionierhilfe (10) mit halbkreisförmiger Aussparung zur horizontalen Positionierung des unteren Bereichs des Behälters (20) aufweisen.

8. Kassette gemäß Anspruch 3, **dadurch gekennzeichnet, dass** die die Behälter bildenden Kassettenteile (2, 3) einen Totvolumen-optimierten Hohlraumboden (8) enthalten.

9. Kassette gemäß Anspruch 3, **dadurch gekennzeichnet, dass** die die Behälter bildenden Kassettenteile (2, 3) an ihren einander zuweisenden Seiten jeweils mit einer Wölbung (5) versehen sind.

10. Kassette gemäß Anspruch 3, **dadurch gekennzeichnet, dass** der Behälter (20) an seiner Oberseite mit einer als Schweißfläche ausgebildeten Ringfläche (24) versehen ist.

11. Kassette gemäß Anspruch 3, **dadurch gekennzeichnet, dass** der Behälter (20) an seiner Unterseite mit einem geschlitzten Ring (21), der als lösbare Kupplung dient, versehen ist.

12. Kassette gemäß Anspruch 3, **dadurch gekennzeichnet, dass** der drehbar in den die Behälter bildenden Kassettenteile (2, 3) aufgenommene Behälter (20) mit angetriebenen, in einen Magazinteller (41) eingelassenen Kupplungsstücken (31) kuppelbar ist.

13. Kassette gemäß Anspruch 12, **dadurch gekennzeichnet, dass** die Kupplungsstücke (31) am Magazinteller (41) über Antriebswellen (45) und Getriebe (44) angetrieben sind.

## Claims

1. Method for treating particle-charged reagents and reagents in liquid form received in containers (2, 3; 20) including the following method steps:
a) Joining a reagent cartridge (1) from cartridge parts (2, 3) in such a way that a container (20) receiving a particle-charged reagent is mounted between the cartridge parts so as to be able to rotate,
b) Providing a releasable coupling connection (21, 31) between the reagent cartridge, in an assembled state (26), and a magazine plate (41) containing a driven coupling piece (31), and
c) Imparting a rotation movement to the container (20) receiving the particle-charged reagent via the coupling connection (21, 31) in order to homogenise the particle-charged reagent,
**characterised in that** the reagent cartridge (1) in the assembled state (26) stands with its flat underside (28) on the magazine plate (41) during the rotation of the container (20).

2. Method according to claim 1, **characterised in that** the container (20) receiving the particle-charged reagent is set in rotation relative to the reagent cartridge (1) in the assembled state (26).

3. Cartridge for receiving containers (2, 3, 30) which respectively receive particle-charged and particle-free reagents, the container (20) containing the particle-charged reagent being rotatably received, the reagent cartridge (1) comprising cartridge parts (2, 3) which can be joined together, form containers and rotatably mount the container (20) receiving the particle-charged reagent in the joined-together state (20), **characterised in that** the container (26) is provided on its inside with a spiral-shaped structure (23) in helix form extending in the circumferential direction.

4. Cartridge according to claim 3, **characterised in that** the container (20) is designed as a container for receiving particle-charged reagents.

5. Cartridge according to claim 3, **characterised in that** the cartridge parts (2, 3) forming the containers can be locked together by means of a catch closure (6, 7).

6. Cartridge according to claim 3, **characterised in that** the cartridge parts (2, 3) forming the containers have a weld face (9) on their top (27).

7. Cartridge according to claim 6, **characterised in that** the cartridge parts (2, 3) forming the containers have on their top (27) a shoulder (29) and in the region of their flat underside (28) a positioning aid (10) with a semicircular recess for horizontally positioning the lower region of the container (20).

8. Cartridge according to claim 3, **characterised in that** the cartridge parts (2, 3) forming the containers contain a hollow cavity base (8) with optimised dead volume.

9. Cartridge according to claim 3, **characterised in that** the cartridge parts (2, 3) forming the containers are provided in each case with a curvature (5) on their sides facing one another.

10. Cartridge according to claim 3, **characterised in that** the container (20) is provided at its top with an annular surface (24) designed as a weld face.

11. Cartridge according to claim 3, **characterised in that** the container (20) is provided on its underside with a slotted ring (21) which serves as a releasable coupling.

12. Cartridge according to claim 3, **characterised in that** the container (20) received rotatably in the cartridge parts (2, 3) forming the containers can be coupled to driven coupling pieces (31) let into a magazine plate (41).

13. Cartridge according to claim 12, **characterised in that** the coupling pieces (31) on the magazine plate (41) are driven via drive shafts (45) and gears (44).

## Revendications

1. Procédé pour le traitement de réactifs contenant des particules et de réactifs sous forme liquide présents dans des récipients (2, 3 ; 20), comprenant les étapes opératoires suivantes :
a) l'assemblage d'une cassette pour des réactifs (1) à partir de parties de cassette (2, 3) de telle sorte qu'entre ces dernières, un récipient (20) destiné à la réception d'un réactif contenant des particules est logé de manière à pouvoir tourner;
b) la réalisation d'une liaison amovible par couplage (21, 31) entre la cassette pour des réactifs (1) à l'état confectionné (26) et un plateau de magasin (41) contenant une pièce de couplage entraînée (31);
c) l'impression d'un mouvement rotatif au récipient (20) destiné à la réception du réactif contenant des particules, via la liaison par couplage (21, 31) à des fins d'homogénéisation du réactif contenant des particules,
**caractérisé en ce que** la cassette pour des réactifs (1), à l'état confectionné (26), lors de la rotation des récipients (20), est posée avec son côté inférieur plat (28) sur le plateau de magasin (41).

2. Procédé selon la revendication 1, **caractérisé en ce que** le récipient (20) destiné à la réception du réactif contenant des particules, est mis en rotation par rapport à la cassette pour des réactifs (1) à l'état confectionné (26).

3. Cassette destinée à la réception de récipients (2, 3, 20) qui comprennent respectivement des réactifs contenant des particules et des réactifs exempts de particules, le récipient (20) contenant le réactif contenant des particules étant monté de manière rotative, la cassette pour des réactifs (1) comprenant des parties de cassette (2, 3) formant des récipients et aptes à être assemblées l'une à l'autre, qui, à l'état monté (26) par emboîtement réciproque, logent le récipient (20) destiné à la réception du réactif contenant des particules, de manière à ce qu'il puisse tourner, **caractérisée en ce que** le récipient (20) est muni sur son côté interne d'une structure en spirale (23) s'étendant en direction périphérique, sous une forme hélicoïdale.

4. Cassette selon la revendication 3, **caractérisée en ce que** le récipient (20) est réalisé sous la forme d'un récipient destiné à la réception de réactifs contenant des particules.

5. Cassette selon la revendication 3, **caractérisée en ce que** les parties de cassette (2, 3) formant les récipients sont à même de s'encliqueter les unes avec les autres au moyen d'une fermeture par encliquetage (6, 7).

6. Cassette selon la revendication 3, **caractérisée en ce que** les parties de cassette (2, 3) formant les récipients présentent, sur leur côté supérieur (27), une surface de soudage (9).

7. Cassette selon la revendication 6, **caractérisée en ce que** les parties de cassette (2, 3) formant les récipients présentent, sur leur côté supérieur (27), une bordure (29), et dans la zone de leur côté inférieur plat (28), un auxiliaire de positionnement (10) comportant un évidement en forme de demi-cercle pour le positionnement horizontal de la partie inférieure du récipient (20).

8. Cassette selon la revendication 3, **caractérisée en ce que** les parties de cassette (2, 3) formant les récipients contiennent une base d'espace creux (8) optimisée en ce qui concerne le volume mort.

9. Cassette selon la revendication 3, **caractérisée en ce que** les parties de cassette (2, 3) formant les récipients sont munies, sur leurs côtés tournés l'un vers l'autre, respectivement d'un bombement (5).

10. Cassette selon la revendication 3, **caractérisée en ce que** le récipient (20) est muni, sur son côté supérieur, d'une surface annulaire (24) réalisée sous forme de surface de soudage.

11. Cassette selon la revendication 3, **caractérisée en ce que** le récipient (20) est muni, sur son côté inférieur, d'une bague fendue (21) qui fait office de couplage amovible.

12. Cassette selon la revendication 3, **caractérisée en ce que** le récipient (20) monté de manière à pouvoir tourner dans les parties de cassette (2, 3) formant les récipients peut être accouplé avec des pièces d'accouplement entraînées (31), encastré dans un plateau de magasin (41).

13. Cassette selon la revendication 12, **caractérisée en ce que** les pièces d'accouplement (31) sont entraînées sur le plateau de magasin (41) via des arbres d'entraînement (45) et des transmissions (44).
